# EUROPEAN PATENT APPLICATION

(11) **EP 2 613 612 A1**
(43) Date of publication of application: **10.07.2013**
(21) Application number: 10856726.4
(22) Date of filing: 03.09.2010
(51) Int. Cl.: H05B 37/02

(54) **APPLIANCE CONTROL SYSTEM**

(71) Applicant: Panasonic Corporation, Osaka 571-8501 (JP)
(72) Inventor: TAKEHARA, Kiyotaka, Chuo-ku, Osaka 540-6207 (JP); HIBIYA, Shinpei, Chuo-ku, Osaka 540-6207 (JP); NAKAKITA, Kenji, Chuo-ku, Osaka 540-6207 (JP)
(74) Representative: Müller-Boré & Partner Patentanwälte
(86) International application number: PCT/JP2010/065156
(87) International publication number: WO 2012/029177

(57) **Abstract**

The appliance control system includes a control device, a human detection sensor, and a manual operation switch. The control device includes a selecting unit configured to select a mode of an appliance driving unit controlling an appliance, from an operation mode in which the appliance driving unit operates the appliance, a limited mode in which the appliance driving unit limits an operation of the appliance, and a rest mode in which the appliance driving unit terminates the operation of the appliance. The selecting unit changes the appliance driving unit to the operation mode when the manipulation switch is turned on. The selecting unit changes the appliance driving unit to the rest mode when the manipulation switch is turned off. The selecting unit changes the appliance driving unit to the waiting mode when the human detection sensor does not detect a human within waiting time while the appliance driving unit is in the operation mode. While the appliance driving unit is in the waiting mode, the selecting unit changes the appliance driving unit to the operation mode when the human detection sensor detects a human within waiting time, and changes the appliance driving unit to the rest mode when the human detection sensor does not detect a human within waiting time. While the appliance driving unit is in the rest mode, the selecting unit does not change the appliance driving unit to the operation mode even if the human detection sensor detects a human.

## Description

### Technical Field

The present invention relates to appliance control systems.

### Background Art

JP 9-120708 A discloses a building management system (appliance control system). This building management system includes an indoor-human detection sensor judging whether or not a human is in a particular place. In a situation where a lighting fixture is on, when the human detection sensor identifies that a human is not in the particular place, the building management system turns off the lighting fixture. Meanwhile, when the human detection sensor identifies that a human is in the particular place after the lighting fixture is turned off, the building management system turns on the lighting fixture again.

When a long time period has elapsed from the time at which the human detection sensor concluded a human is not in the particular place, it is considered that a human no longer exists near the lighting fixture.

In the aforementioned building management system, even if a long time period has elapsed from the time at which the building management system turned off the lighting fixture, when the human detection sensor concludes, due to false detection, that a human is in the particular place, the building management system turns on the lighting fixture again. Hence, such false detection is likely to cause a wasted consumption of electric power.

### Summary of Invention

In view of the above insufficiency, the present invention has aimed to propose an appliance control system capable of reducing a wasted consumption of electric power which would otherwise occur due to false detection.

The appliance control system in accordance with the present invention includes a control device, a human detection sensor, and a manual operation switch. The control device includes a controlling unit configured to control an appliance; a selecting unit; a manual operation accepting unit configured to select one from an on-signal and an off-signal in accordance with manual operation of the manual operation switch and output selected one to the selecting unit; and a timer unit. The selecting unit is configured to select a mode of the controlling unit from an operation mode in which the controlling unit operates the appliance, a limited mode in which the controlling unit limits an operation of the appliance, and a rest mode in which the controlling unit terminates the operation of the appliance. The human detection sensor is located in a place where the appliance is installed, the human detection sensor being configured to output a detection signal to the selecting unit in response to human detection. The selecting unit includes an identifying module, a changing module, and a judging module. The identifying module is configured to identify the current mode of the controlling unit. The changing module is configured to, upon receiving the on-signal from the manual operation accepting unit, change the controlling unit to the operation mode and send a judgment start message to the judging module. The judging module is configured to start a judgment process in response to receipt of the judgment start message. The judging module is configured to, in the judgment process, control the timer unit in such a manner to count up judgment time. The judging module is configured to, upon receiving the detection signal from the human detection sensor before the judgment time exceeds waiting time, output a presence signal to the judging module, and to, upon not receiving the detection signal from the human detection sensor before the judgment time exceeds the waiting time, output an absence signal to the judging module. The changing module is configured to, upon receiving the absence signal from the judging module while an identification result of the identifying module indicates the operation mode, change the controlling unit to the limited mode and send the judgment start message to the judging module. The changing module is configured to, upon receiving the presence signal from the judging module while the identification result of the identifying module indicates the limited mode, change the controlling unit to the operation mode and send the judgment start message to the judging module. The changing module is configured to, upon receiving the off-signal from the manual operation accepting unit, change the controlling unit to the rest mode and send a judgment stop message to the judging module. The judging module is configured to not perform the judgment process until receiving the judgment start message once receiving the judgment stop message. The changing module is configured to, upon receiving the absence signal from the judging module while the identification result of the identifying module indicates the limited mode, change the controlling unit to the rest mode and send the judgment stop message to the judging module.

In a preferred aspect, the limited mode includes a low consumption mode in which the controlling unit operates the appliance at a power consumption lower than that in the operation mode and a waiting mode in which the controlling unit terminates the operation of the appliance. The changing module is configured to, upon receiving the absence signal from the judging module while the identification result of the identifying module indicates the operation mode, change the controlling unit to the low consumption mode and send the judgment start message to the judging module. The changing module is configured to, upon receiving the presence signal from the judging module while the identification result of the identifying module indicates the low consumption mode, change the controlling unit to the operation mode and send the judgment start message to the judging module. The changing module is configured to, upon receiving the absence signal from the judging module while the identification result of the identifying module indicates the low consumption mode, change the controlling unit to the waiting mode and send the judgment start message to the judging module. The changing module is configured to, upon receiving the absence signal from the judging module while the identification result of the identifying module indicates the waiting mode, change the controlling unit to the rest mode and send the judgment stop message to the judging module.

In a more preferred aspect, the changing module is configured to, upon receiving the presence signal from the judging module while the identification result of the identifying module indicates the waiting mode, change the controlling unit to the low consumption mode and send the judgment start message to the judging module.

In a preferred aspect, the appliance control system further includes an alarm. The changing module is configured to, upon receiving the absence signal from the judging module while the identification result of the identifying module indicates the low consumption mode, send an alarming start message to the alarm before changing the controlling unit to the waiting mode. The alarm is configured to, in response to receipt of the alarming start message, announce that the appliance is going to be turned off

### Brief Description of Drawings

FIG. 1 is a schematic system configuration diagram illustrating the appliance control system of the first embodiment,
FIG. 2 is a block diagram illustrating the above appliance control system,
FIG. 3 is a status transition diagram illustrating a control operation of the above appliance control system,
FIG. 4 is a flowchart of an appliance control program of the above appliance control system,
FIG. 5 is a flowchart of a timer control program of the above appliance control system,
FIG. 6 is a schematic system configuration diagram illustrating the appliance control system of the second embodiment,
FIG. 7 is a block diagram illustrating the above appliance control system,
FIG. 8 is a flowchart of an appliance control program of the above appliance control system, and
FIG. 9 is a status transition diagram illustrating a control operation of the appliance control system of the third embodiment.

### Description of Embodiments

The following explanations referring to drawings are made to respective embodiments in which the appliance control system in accordance with the present invention is applied to a system designed to judge whether or not a human is in a room of a building and to terminate an operation of a lighting fixture installed in the room in response to a detection result.

### (FIRST EMBODIMENT)

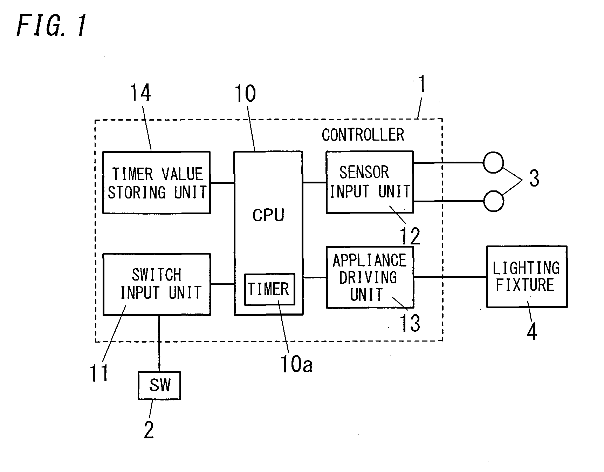

FIG. 1 shows a schematic system configuration diagram of the appliance control system of the first embodiment. The appliance control system includes, as primary components, a lighting fixture (appliance) **4** installed in a room, a manipulation switch (SW) **2** for on and off operations to turn on and off the lighting fixture **4,** a human detection sensor (indoor-human detecting means) **3** configured to judge whether or not a human is in the room where the lighting fixture **4** is installed, and a controller (controlling means) **1.** The controller **1** is configured to turn on and off the lighting fixture in response to the on and off operation of the manipulation switch **2.** The controller **1** is configured to control an operating state of the lighting fixture **4** based on detection information obtained from the human detection sensor **3.** As mentioned in the above, the appliance control system of the present embodiment includes the controller (control device) **1,** the human detection sensor **3,** and the manipulation switch (manual operation switch) **2.**

The human detection sensor **3** is located in a place where the lighting fixture **4** is installed. For example, the human detection sensor **3** includes a pyroelectric infrared detecting element designed to identify a presence of a human based on detection of heat radiated from the human. Upon concluding that a human is in the room in which the lighting fixture **4** as a control object is installed, the human detection sensor **3** outputs a human detection signal (detection signal) to the controller 1 (especially, a selecting unit **lOb** as mentioned below). In brief, the human detection sensor **3** is configured to output the detection signal to the selecting unit **10b** in response to human detection. Besides, the present system includes the two human detection sensors **3.** However, the number of the human detection sensors **3** may be one or three or more. The necessary number of the human detection sensors **3** may be decided such that it is possible to judge whether or not a human exists within the entire area of the room where the lighting fixture **4** is installed. In this embodiment, adopted as the indoor-human detecting means is the human detection sensor **3** including the pyroelectric infrared detecting element designed to identify a presence of a human based on detection of heat radiated from a human. However, for example, the indoor-human detecting means may be configured to judge whether or not a human is in the room, by use of a sound sensor designed to detect daily life sound produced by a human. The indoor-human detecting means is not limited to a specific detecting means so long as it is possible to judge whether or not a human is in the room (detect a human).

The controller **1** includes a CPU **10,** a switch input unit (manual operation accepting unit) **11,** a sensor input unit (sensor connection unit) **12,** an appliance driving unit (control unit) **13,** and a timer value storing unit (storage unit) **14.**

The switch input unit **11** receives operation input from the manipulation switch **2** and then outputs the received operation input to the CPU **10.** In other words, the switch input unit (manual operation accepting unit) **11** is configured to select one from an on-signal (on-operation signal) and an off-signal (off-operation signal) in accordance with manual operation of the manipulation switch (manual operation switch) **2** and output selected one to the CPU **10** (selecting unit **10b**). In this embodiment, the manipulation switch **2** may establish wired communication with the switch input unit **11.** Alternatively, the manipulation switch **2** may establish wireless communication with the switch input unit **11.** In other words, the manipulation switch **2** may be provided to a remote controller designed to establish wireless communication with the switch input unit **11.**

The sensor input unit **12** waits to receive the human detection signals (detection signals) from the respective human detection sensors **3.** Upon receiving the human detection signal (detection signal) from at least one of the human detection sensors **3,** the sensor input unit **12** transfers the human detection signal (detection signal) to the CPU **10** (selecting unit **10b**).

The CPU **10** outputs a control order for turning on and off the lighting fixture **4,** to the appliance driving unit **13,** based on the operation signal (the on-operation signal and the off-operation signal) received via the switch input unit **11.** Further, the CPU **10** outputs a control order for changing an operation state of the lighting fixture **4,** to the appliance driving unit **13,** based on the human detection signal received from the sensor input unit **12.**

The appliance driving unit **13** controls the lighting fixture **4** based on the control order received from the CPU **10.** That is, the appliance driving unit (controlling unit) **13** is configured to control the lighting fixture (appliance) **4.**

The timer value storing unit (storage unit) **14** is a rewritable nonvolatile memory. The timer value storing unit **14** preliminarily stores timer values including operation holding time (first waiting time) **T1,** auxiliary operation time (second waiting time) **T2,** and rest waiting time (third waiting time) **T3** which are explained below.

Further, the CPU **10** incorporates a timer (timer unit) **10a** designed to count clock signals to perform a counting operation. The CPU **10** uses the timer **10a** to count time (absence continuation time) in which the CPU has not received the human detection signal via the sensor input unit **12.** In brief, upon receiving the human detection signal via the sensor input unit **12,** the CPU **10** controls the timer **10a** in such a manner to clear counted time and restart the counting operation. Besides, the human detection sensor **3** used in the present system can identify a presence of a human in the detection area, but cannot identify an absence of a human in the detection area. Hence, when the human detection sensor **3** has not detected a human in the room, it is estimated that a human is not in the room.

The CPU **10** as mentioned in the above includes the selecting unit **10b.** The selecting unit **10b** is configured to select a mode of the controlling unit **13** from an operation mode (normal operation state) in which the controlling unit **13** operates the appliance **4,** a limited mode in which the controlling unit **13** limits an operation of the appliance **4,** and a rest mode (initial rest mode) in which the controlling unit **13** terminates the operation of the appliance **4.** In the present embodiment, the limited mode includes a low consumption mode (auxiliary operation state) in which the controlling unit **13** operates the appliance **4** at a power consumption lower than that in the operation mode and a waiting mode (rest waiting state) in which the controlling unit **13** terminates the operation of the appliance **4.** For example, in the low consumption mode, the control unit **13** decreases luminance of the lighting fixture **4** down to a predetermined value lower than that in the operation mode. Thereby, in the low consumption mode, the control unit **13** operates the appliance **4** at power consumption lower than that in the operation mode. The selecting unit **10b** is realized by means of performing a predetermined program by the CPU **10.**

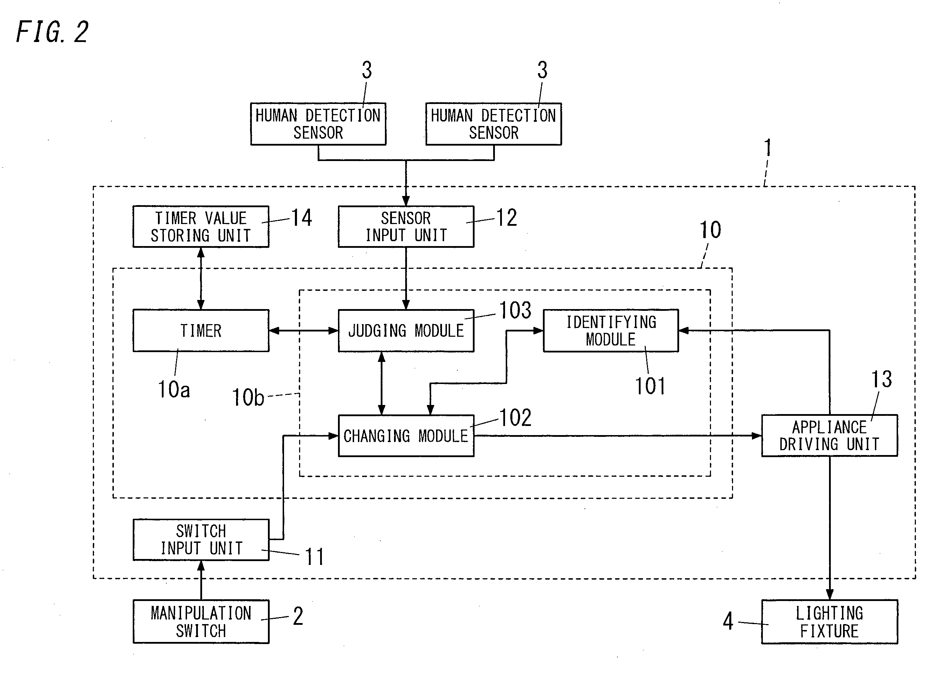

As shown in FIG. 2, the selecting unit **10b** includes an identifying module **101,** a changing module **102,** and a judging module **103.**

The identifying module **101** is configured to identify the current mode of the controlling unit **13.** For example, the identifying module **101** is configured to refer to information such as the operation state of the controlling unit **13** and a signal (control signal) outputted from the changing module **102** to the controlling unit **13** and identify the current mode (the operation mode, the rest mode, the low consumption mode, and the waiting mode) of the controlling mode **13.**

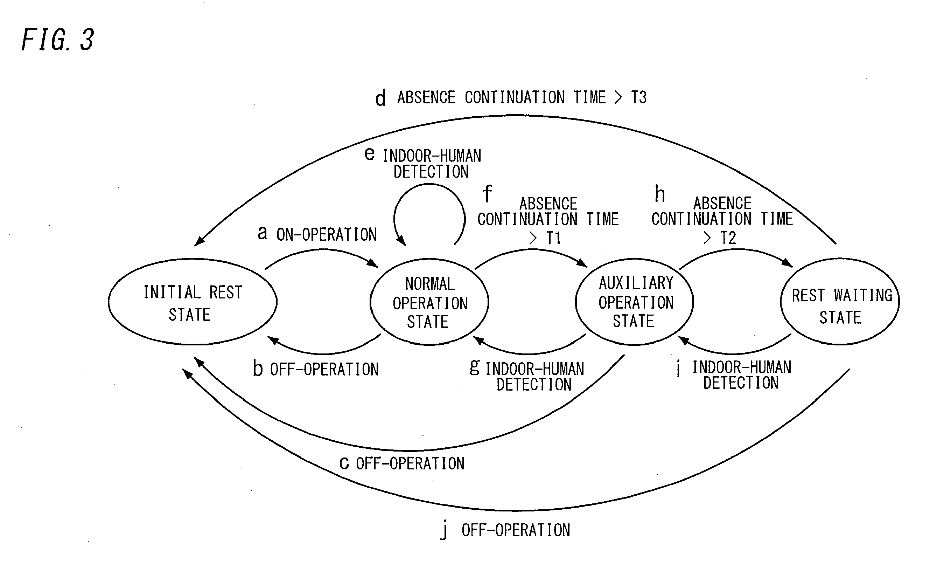

The changing module **102** is configured to, upon receiving the on-signal from the manual operation accepting unit **11,** change the controlling unit **13** to the operation mode and send a judgment start message (first judgment start message) to the judging module **103** (as illustrated by the arrow "a" in FIG. 3).

The changing module **102** is configured to, upon receiving the off-signal from the manual operation accepting unit **11,** change the controlling unit **13** to the rest mode and send a judgment stop message to the judging module **103** (as illustrated by the arrows **"b", "c",** and **"j"** in FIG. 3).

The judging module **103** is configured to start a judgment process (first judgment process) in response to receipt of the judgment start message (first judgment start message). The judging module **103** is configured to, in the judgment process (first judgment process), control the timer unit 10a in such a manner to count up judgment time (absence continuation time). The judging module **103** is configured to, upon receiving the detection signal from the human detection sensor **3** before the judgment time exceeds the first waiting time (operation holding time) **T1,** output a presence signal to the judging module **103.** The judging module **103** is configured to, upon not receiving the detection signal from the human detection sensor **3** before the judgment time exceeds the first waiting time **T1,** output an absence signal to the judging module **103.** The judging module **103** is configured to, after outputting the presence signal in the first judgment process, perform the first judgment process again (as illustrated by the arrow "e" in FIG. 3). In other words, while the controlling unit **3** is in the operation mode, the judging module **103** repeats the judgment process until the judging module **103** outputs the absence signal.

The judging module **103** is configured to not perform the judgment process until receiving the judgment start message once receiving the judgment-stop message. In other words, after receiving the judgment stop message, the judging module **103** outputs neither the presence signal nor the absence signal until receiving the judgment start message. Hence, while the controlling unit **13** is in the rest mode, even if the human detection sensor **3** detects a human, there is no possibility that the controlling unit **13** is changed from the rest mode to the other mode (e.g., the operation mode, the low consumption mode, and the waiting mode).

The changing module **102** is configured to, upon receiving the absence signal from the judging module **103** while an identification result of the identifying module **101** indicates the operation mode, change the controlling unit **13** to the limited mode (low consumption mode) and send the judgment start message (second judgment start message) to the judging module **103** (as illustrated by the arrow **"f"** in FIG. 3).

The judging module **103** is configured to start the judgment process (second judgment process) in response to receipt of the judgment start message (second judgment start message). The judging module **103** is configured to, in the judgment process (second judgment process), control the timer unit **10a** in such a manner to count up the judgment time. The judging module **103** is configured to, upon receiving the detection signal from the human detection sensor **3** before the judgment time exceeds the second waiting time (auxiliary operation time) **T2,** output the presence signal to the judging module **103.** The judging module **103** is configured to, upon not receiving the detection signal from the human detection sensor **3** before the judgment time exceeds the second waiting time **T2,** output the absence signal to the judging module **103.**

The changing module **102** is configured to, upon receiving the presence signal from the judging module **103** while the identification result of the identifying module **101** indicates the limited mode (low consumption mode), change the controlling unit **13** to the operation mode and send the judgment start message (first judgment start message) to the judging module **103** (as illustrated by the arrow **"g"** in FIG. 3).

The changing module **102** is configured to, upon receiving the absence signal from the judging module **103** while the identification result of the identifying module **101** indicates the low consumption mode, change the controlling unit **13** to the limited mode (waiting mode) and send the judgment start message (third judgment start message) to the judging module **103** (as illustrated by the arrow **"h"** in FIG. 3).

The judging module **103** is configured to start the judgment process (third judgment process) in response to receipt of the judgment start message (third judgment start message). The judging module **103** is configured to, in the judgment process (third judgment process), control the timer unit 10a in such a manner to count up the judgment time. The judging module **103** is configured to, upon receiving the detection signal from the human detection sensor **3** before the judgment time exceeds the third waiting time (rest waiting time) **T3,** output the presence signal to the judging module **103.** The judging module **103** is configured to, upon not receiving the detection signal from the human detection sensor **3** before the judgment time exceeds the third waiting time **T3,** output the absence signal to the judging module **103.**

The changing module **102** is configured to, upon receiving the presence signal from the judging module **103** while the identification result of the identifying module **101** indicates the limited mode (waiting mode), change the controlling unit **13** to the low consumption mode and send the judgment start message (second judgment start message) to the judging module **103** (as illustrated by the arrow "i" in FIG. 3).

The changing module **102** is configured to, upon receiving the absence signal from the judging module **103** while the identification result of the identifying module **101** indicates the waiting mode, change the controlling unit **13** to the rest mode and send the judgment stop message to the judging module **103** (as illustrated by the arrow **"d"** in FIG. **3****).**

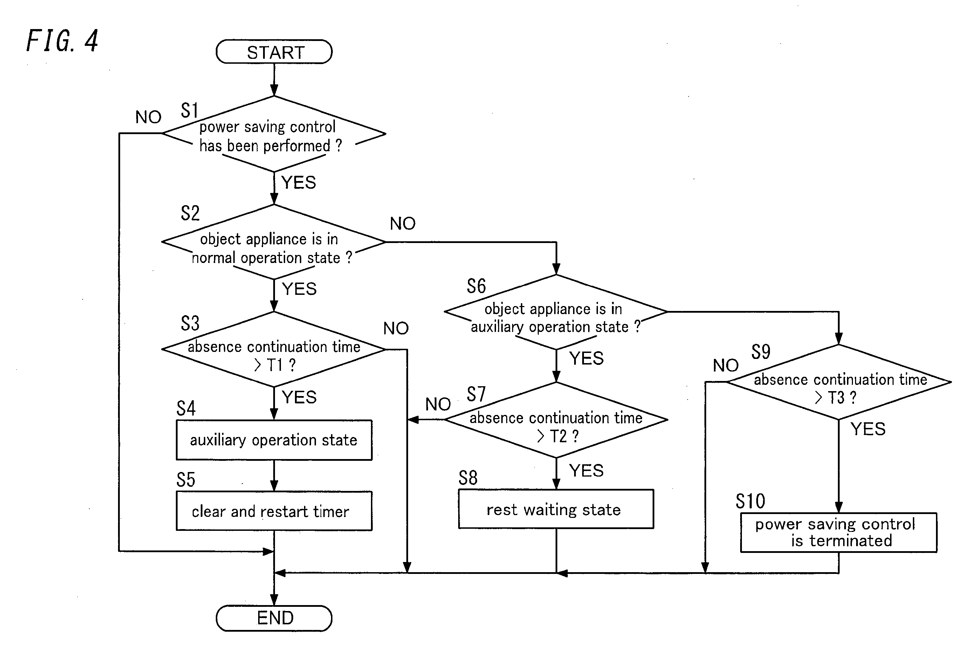

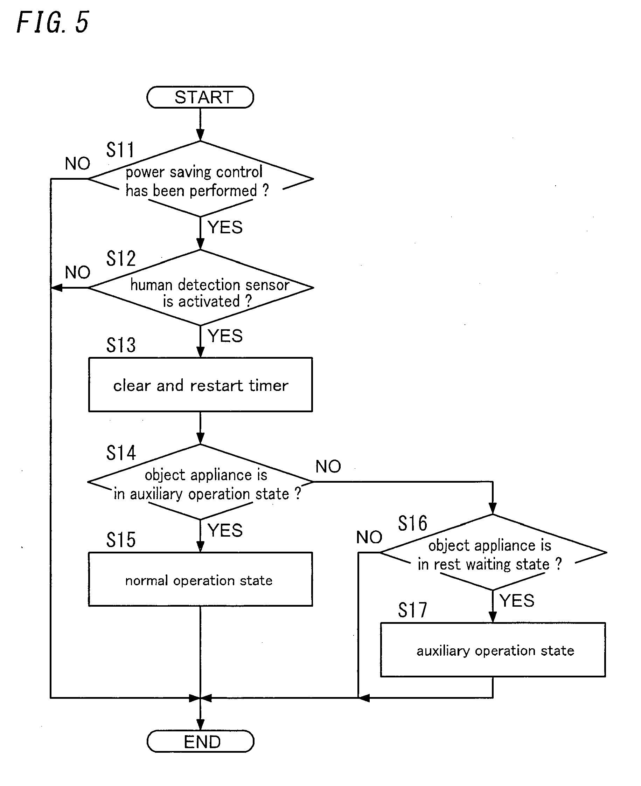

The following explanations based on the flowcharts shown in respective FIGS. **4** and **5** are made to an operation that the controller **1** controls the lighting fixture **4.**

When a user performs the off-operation by use of the manipulation switch **2,** the off-operation signal is inputted into the CPU 10 via the switch input unit **11.** The CPU **10** outputs the control order for turning off the lighting fixture **4** to the appliance driving unit **13,** thereby turning off the lighting fixture **4** (initial rest state). In a situation where the lighting fixture **4** is off (initial rest state), when a user performs the on-operation by use of the manipulation switch **2,** the CPU **10** receives the on-operation signal inputted via the switch input unit **11** and then outputs the control order for operating the lighting fixture **4** at the maximum dimming level to the appliance driving unit **13,** thereby operating the lighting fixture **4** at the maximum dimming level (normal operation state). At this time, the CPU 10 starts power saving control of changing the operation state of the lighting fixture **4** in response to the human detection signal of the human detection sensor 3.

The CPU 10 uses a timer interrupt to perform the appliance control program as illustrated by the flowchart in FIG. 4 and the timer control program as illustrated by the flowchart in FIG. 5. The first explanation is made to the control operation in accordance with the appliance control program. Upon starting the appliance control program, the CPU 10 judges whether or not the power saving control has been performed (S1). When the power saving control has not been performed, the CPU 10 quits (ends) the appliance control program. When the power saving control has been performed, the CPU 10 judges whether or not the lighting fixture 4 is in the normal operation state (by use of the identifying module 101) **(S2).** When the lighting fixture **4** is in the normal operation state, the CPU 10 judges whether or not the counted time of the timer 10a exceeds the predetermined operation holding time **T1,** that is, the time (absence continuation time in which an absence state continues) in which a human has not been detected exceeds the operation holding time **T1** (by use of the judging module **103) (S3).** When the absence continuation time does not exceed the operation holding time T1, the CPU 10 quits the appliance control program and continues the normal operation state. When the judgment in **S3** concludes that the absence continuation time exceeds the operation holding time T1, the CPU 10 outputs the control signal for operating the lighting fixture 4 at the dimming level lower than that in the normal operation state to the appliance driving unit 13, thereby controlling the appliance driving unit **13** in such a manner to operate the lighting fixture **4** in the auxiliary operation state **(S4).** Thereafter, the CPU 10 clears the counted time counted by the timer **10a** and restarts the counting operation of the timer **10a (S5),** and subsequently quits the appliance control program.

When the judgment in **S2** concludes that the lighting fixture **4** is not in the normal operation state, the CPU 10 judges whether or not the lighting fixture **4** is in the auxiliary operation state **(S6).** When the lighting fixture **4** is in the auxiliary operation state, the CPU 10 judges whether or not the counted time of the timer **10a,** that is, the time (absence continuation time in which an absence state continues) in which a human is not detected from the beginning of the auxiliary operation state, exceeds the predetermined auxiliary operation time **T2 (S7).** When the absence continuation time does not exceed the auxiliary operation time **T2,** the CPU **10** quits the current control program and continues the auxiliary operation state. When the judgment in **S7** concludes that the absence continuation time exceeds the auxiliary operation time **T2,** the CPU **10** outputs the control order for turning off the lighting fixture **4** to the appliance driving unit **13,** thereby deactivating the lighting fixture **4** to change the operation mode of the lighting fixture 4 to the rest waiting state **(S8).** Subsequently the CPU 10 quits the appliance control program.

When the judgment in **S6** concludes that the lighting fixture 4 is not in the auxiliary operation state, the CPU 10 concludes that the lighting fixture 4 is in the rest waiting state. Further, the CPU 10 judges whether or not the counted time of the timer **10a,** that is, the time (absence continuation time in which an absence state continues) in which a human has not been detected since the time at which the lighting fixture **4** is changed to the rest waiting state, exceeds the predetermined rest waiting time **T3 (S9).** When the absence continuation time does not exceed the rest waiting time **T3,** the CPU 10 quits the current control program and continues the rest waiting state. When the absence continuation time exceeds the rest waiting time **T3,** the CPU 10 ends the power saving control **(S10).** Consequently, the lighting fixture **4** is switched to the initial rest mode enabling a user to switch the lighting fixture **4** to the normal operation state by simply performing the on-operation by use of the manipulation switch **2.**

Next, the control operation in accordance with the timer control program is explained with reference to the flowchart of FIG. 5. Upon starting the timer control program, the CPU 10 judges whether or not the power saving control has been performed **(S11).** When the power saving control has not been performed, the CPU 10 quits the timer control program. When the power saving control has been performed, the CPU 10 judges whether or not the CPU 10 receives the human detection signal from the sensor input unit **12 (S12).** When the CPU 10 receives no human detection signal, the CPU 10 quits the timer control program. When the CPU 10 has received the human detection signal, the CPU 10 controls the timer 10a in such a manner to clear the counted time and restart the counting operation **(S13).** Subsequently, the CPU 10 judges whether or not the lighting fixture 4 is in the auxiliary operation state **(S14).** When the lighting fixture **4** is in the auxiliary operation state, the CPU 10 outputs the control order for operating the lighting fixture **4** at the maximum dimming level to the appliance driving unit **13,** and then the appliance driving unit **13** operates the lighting fixture **4** at the maximum dimming level. In brief, the operation state of the lighting fixture **4** is changed to the normal operation state **(S15).** When the result of the judgment in **S14** concludes that the lighting fixture **4** is not in the auxiliary operation state, the CPU 10 judges whether or not the lighting fixture **4** is in the rest waiting state **(S16).** When the lighting fixture **4** is in the rest waiting state, the CPU 10 outputs the control signal for operating the lighting fixture **4** at the dimming level lower than that at the normal operation state to the appliance driving unit **13,** thereby dimming the lighting fixture **4** by use of the appliance driving unit **13** (changing the lighting fixture **4** to the auxiliary operation state) **(S17).** Thereafter, the CPU 10 quits the timer control program. When the judgment in **S16** concludes that the lighting fixture **4** is not in the rest waiting state, the CPU 10 concludes that the lighting fixture **4** is in the normal operation state, and then quits the timer control program.

Consequently, the aforementioned operation would be well explained with reference to a state transition diagram as illustrated in FIG. 3. The operation of the controller **1** is explained referring to the state transition diagram. When a user performs the off-operation by use of the manipulation switch **2** while the lighting fixture **4** is in the normal operation state or the auxiliary operation state (as illustrated by the arrows **"b", "c",** and **"j"** in FIG. 3), the CPU 10 outputs the control order for turning off the lighting fixture **4** to the appliance driving unit **13** in response to receipt of the off-operation signal from the manipulation switch **2,** thereby changing the lighting fixture **4** to the extinction state (initial rest state). In contrast, when a user performs the on-operation by use of the manipulation switch **2** while the lighting fixture **4** is turned off (the initial rest state) (as illustrated by the arrow "a" in FIG. 3), the CPU 10 outputs the control order for turning on the lighting fixture **4** to the appliance driving unit **13** in response to receipt of the on-operation signal from the manipulation switch **2,** thereby changing the lighting fixture **4 to** the maximum lighting state (normal operation state).

In a situation where the lighting fixture **4** is operated at the maximum dimming level (the normal operation state), the CPU 10 operates the lighting fixture **4** at the maximum dimming level until the predetermined operation holding time **T1** elapses from the last time the human detection sensor **3** detected a human. When the human detection sensor **3** detects a human before the operation holding time T1 elapses from the last time the human detection sensor **3** detected a human, the CPU 10 resets the counted time of the timer 10a in response to input of the human detection signal and restarts the counting of the absence continuation time, thereby prolonging a time period in which the lighting fixture **4** is in the maximum lighting state (as illustrated by the arrow **"e"** in FIG. 3). For example, when a human leaves the room for a short time, the human detection sensor **3** fails to conclude that the human is in the room. In this situation, when the time (absence continuation time) in which a human has not been detected exceeds the operation holding time **T1** (as illustrated by the arrow **"f"** in FIG. 3), the CPU 10 changes the lighting fixture **4** to the auxiliary operation state in which the lighting fixture **4** consumes power lower than that in the normal operation state. In addition, the CPU 10 resets the counted time of the timer 10a and makes the timer 10a count elapsed time of the auxiliary operation state.

When the human detection sensor **3** concludes that a human is in the room before the auxiliary operation time **T2** elapses from the time at which the operation state of the lighting fixture **4** is changed to the auxiliary operation state, the CPU 10 outputs the control order of operating the lighting fixture **4** at the maximum dimming level, to the appliance driving unit **13,** in response to input of the human detection signal, thereby operating the lighting fixture **4** at the maximum dimming level (the normal operation state). In addition, the CPU 10 controls the timer **10a** in such a manner to reset the counted time and restart counting the absence continuation time (as illustrated by the arrow **"g"** in FIG. 3). In contrast, when the human detection sensor **3** does not detect a human before the auxiliary operation time **T2** elapses from the time at which the operation state of the lighting fixture **4** is changed to the auxiliary operation state, the CPU 10 outputs the control order of turning off the lighting fixture **4,** to the appliance driving unit **13,** thereby changing the operation state of the lighting fixture **4** to the rest waiting state. In addition, the CPU 10 controls the timer **10a** such that the timer **10a** resets the counted time and starts counting elapsed time of the rest waiting state (as illustrated by the arrow **"h"** in FIG. 3).

When the human detection sensor **3** concludes that a human is in the room before the rest waiting time **T3** elapses from the time at which the operation state of the lighting fixture **4** is changed to the rest waiting state, the CPU 10 outputs the control order for dimming the lighting fixture **4,** to the appliance driving unit **13,** in response to input of the human detection signal, thereby changing the operation state of the lighting fixture **4** to the auxiliary operation state. In addition, the CPU 10 controls the timer **10a** such that the timer **10a** resets the counted time and then restarts counting the absence continuation time from the time at which the operation state is changed to the auxiliary operation state (as illustrated by the arrow **"i"** in FIG. 3). In contrast, when the human detection sensor 3 does not detect a human before the rest waiting time **T3** elapses from the time at which the operation state is changed to the rest waiting time, the CPU 10 quits the power saving control, and changes the operation state of the lighting fixture **4** to the initial rest state (as illustrated by the arrow **"d"** in FIG. 3). Thereafter, a user can turn on the lighting fixture 4 by simply performing the on-operation by use of the manipulation switch **2.**

As explained in the above, when a state in which the human detection sensor **3** serving as the human detecting means concludes that a human is not in the room continues for the operation holding time T1 while the lighting fixture **4** is in the normal operation state, the controller **1** serving as the controlling means changes the lighting fixture **4** from the normal operation state to the auxiliary operation state. Consequently, it is possible to reduce the power consumption. Further, unless the human detection sensor **3** detects a human before a lapse of the auxiliary operation time T2 from the start of the auxiliary operation state, it is concluded that a human is not in the room, and then the lighting fixture **4** is turned off. Thus, the power consumption of the lighting fixture **4** serving as a load device can be reduced. When the human detection sensor **3** fails to detect a human in the room, the lighting fixture **4** is temporarily changed from the normal operation state to the auxiliary operation state. In this situation, when the human detection sensor **3** detects a human while the lighting fixture **4** is in the auxiliary operation state, the lighting fixture **4** is changed to the normal operation state. Therefore, the false detection does not cause immediate stop of the lighting fixture **4.** It is possible to avoid a situation where a user feels uncomfortable. Further, it is unnecessary to use a high accuracy sensor or a combination of multiple sensors to obtain the indoor-human detecting means. Hence, it is possible to reduce the production cost of the whole system. Moreover, when a human is in the room but is not in the detection area of the human detection sensor or a human leaves the room for a short time, the human detection sensor **3** fails to detect a human. In this situation, when a human comes into the detection area of the human detection sensor **3** before a lapse of the auxiliary operation time, or when a human comes back to the room, the human detection sensor **3** can detect the human. In response to such human detection, the lighting fixture **4** is changed to the normal operation state. Thus, a user need not perform a troublesome operation to return the lighting fixture **4** to the normal operation state. Consequently, it is possible to propose the appliance control system capable of saving power and simplifying the operation process performed by a user.

In addition, when the human detection sensor **3** detects a human before a lapse of the rest waiting time **T3** while the lighting fixture **4** is in the rest waiting state, the controller **1** changes the operation state of the lighting fixture **4** to the auxiliary operation state. Hence, a user can keep the lighting fixture **4** in the auxiliary operation state by coming back to the room before a lapse of the rest waiting time **T3** without performing the on-operation by use of the manipulation switch **2.** Thus, a user is not required to perform the on-operation to keep operating the lighting fixture 4. Consequently, it is possible to propose the appliance control system which saves power and simplifies the operation process performed by a user.

Moreover, when the human detection sensor **3** does not detect a human before a lapse of the rest waiting time **T3** while the lighting fixture **4** is in the rest waiting state, the controller **1** concludes that a human is absent over a long time, and then changes the lighting fixture **4** to the initial rest state. Thereafter, the lighting fixture **4** is kept turned off until the on-operation is performed. In this situation, power consumed by the lighting fixture **4** is zero. Thus, the appliance control system can have the improved power saving function. Further, it is possible to reduce a wasted consumption of electric power which would otherwise occur due to false detection.

Besides, the changing module **102** may be configured to, upon receiving the presence signal from the judging module **103** while the identification result of the identifying module **101** indicates the waiting mode, change the controlling unit **13** to the operation mode and send the first judgment start message to the judging module. In brief, the changing module **102** may change the control unit **13** from the waiting mode to the operation mode without passing through the low consumption mode.

The waiting time **T1** to **T3** may be identical to or different from each other.

### (SECOND EMBODIMENT)

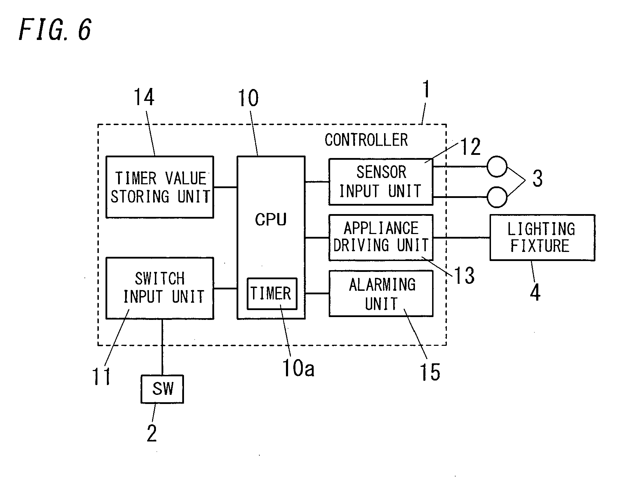

The appliance control system of the second embodiment in accordance with the present invention is explained below based on FIGS. 6 to 8.

FIG. 6 shows a schematic system configuration diagram of the appliance control system of the second embodiment. In the present embodiment, the controller **1** is provided with the alarming unit (alarming function) **15.** The alarming unit **15** is designed to acoustically announce the termination of the operation of the lighting fixture **4,** to a human in the room, at the timing of a lapse of the auxiliary operation time while the lighting fixture **4** is in the auxiliary operation state. Besides, the present appliance control system has the same configuration as the appliance control system of the first embodiment except the present appliance control system includes the alarming unit **15.** Hence, components common to the present embodiment and the first embodiment are designated by the same reference numerals and no explanations thereof are deemed necessary.

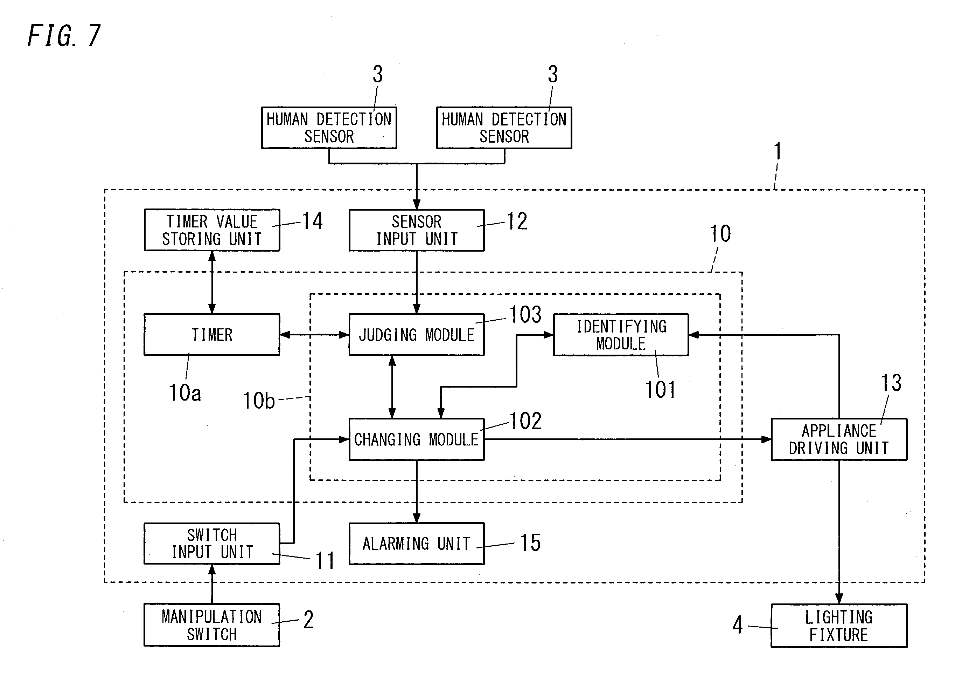

In brief, in the appliance control system of the present embodiment, as shown in FIG. 7, the control device (controller) **1** includes the alarm (alarming unit) **15.**

In the present embodiment, the changing unit **102** is configured to, upon receiving the absence signal from the judging module **103** while the identification result of the identifying module **101** indicates the low consumption mode, send an alarming start message to the alarm **14** before changing the controlling unit **13** to the waiting mode. For example, the changing unit **102** changes the controlling unit **13** to the waiting mode after a lapse of predetermined period (time "α" mentioned below) from the time at which the changing unit **102** sends the alarming start message to the alarm **14.**

The alarm **15** is configured to, in response to receipt of the alarming start message, announce that the appliance **4** is going to be turned off. For example, the alarm **15** is a device providing aural notification, such as a speaker and a buzzer. In this embodiment, the alarm **15** produces a sound or voice message to announce the termination of the operation of the appliance **4.** Besides, the alarm **15** may be a device providing visual notification, such as an LED and a display. The alarm 15 is not necessarily incorporated into the controller **1.**

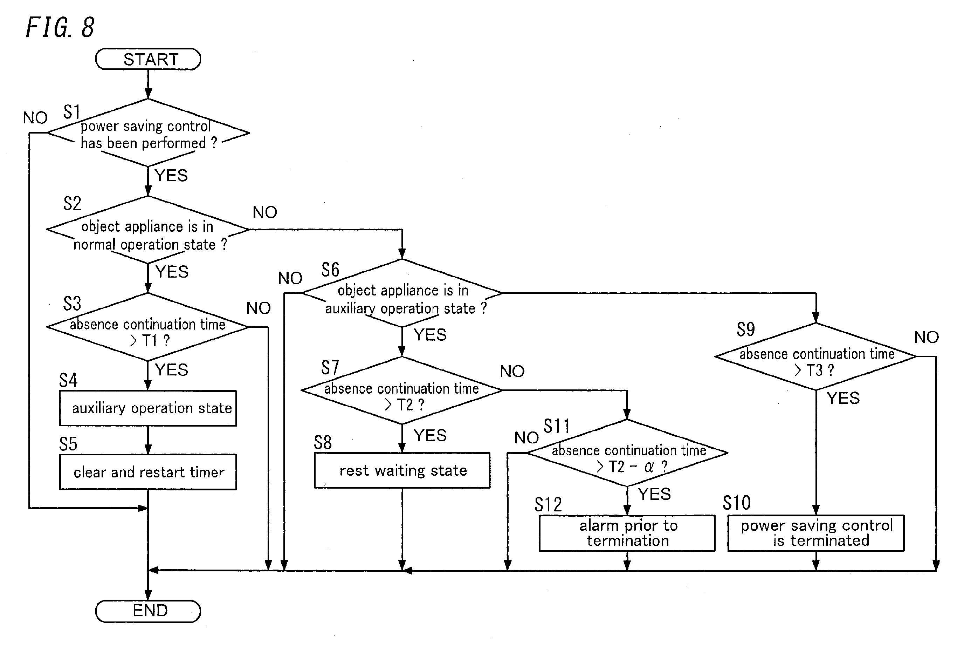

The following explanation referring to the flowchart shown in FIG. 8 is made to the control operation of the lighting fixture 4 performed by the controller **1.**

The CPU 10 of the controller **1** uses the timer interrupt to perform the appliance control program as illustrated by the flowchart in FIG. 8 and the timer control program as illustrated by the flowchart in FIG. 5. The control operation based on the timer control program is same as the operation already explained in the first embodiment, and no explanation thereof is deemed necessary. The following explanation is made to the control operation based on the appliance control program.

Upon starting the appliance control program, the CPU 10 judges whether or not the power saving control has been performed **(S1).** When the power saving control has not been performed, the CPU 10 quits the current control program. When the power saving control has been performed, the CPU 10 judges whether or not the lighting fixture **4** is in the normal operation state **(S2).** When the lighting fixture **4** is in the normal operation state, the CPU 10 judges whether or not the counted time of the timer **10a** exceeds the predetermined operation holding time **T1,** that is, the time (absence continuation time in which an absence state continues) in which a human is not detected exceeds the operation holding time **T1 (S3).** When the absence continuation time does not exceed the operation holding time **T1,** the CPU 10 quits the current control program and continues the normal operation state. When the judgment in **S3** concludes that the absence continuation time exceeds the operation holding time **T1,** the CPU 10 outputs the control signal for operating the lighting fixture **4** at the dimming level lower than that in the normal operation state to the appliance driving unit **13,** thereby controlling the appliance driving unit **13** in such a manner to operate the lighting fixture **4** in the auxiliary operation state **(S4).** Thereafter, the CPU 10 clears the counted time of the timer **10a** and restarts the counting operation of the timer **10a (S5),** and subsequently quits the appliance control program.

When the judgment in **S2** concludes that the lighting fixture **4** is not in the normal operation state, the CPU 10 judges whether or not the lighting fixture **4** is in the auxiliary operation state **(S6).** When the lighting fixture **4** is in the auxiliary operation state, the CPU 10 judges whether or not the counted time of the timer **10a,** that is, the time (absence continuation time in which an absence state continues) in which a human is not detected from the beginning of the auxiliary operation state, exceeds the predetermined auxiliary operation time **T2 (S7).**

When the absence continuation time does not exceed the auxiliary operation time **T2,** the CPU 10 further judges whether or not the absence continuation time exceeds the alarming time (**T2 -** α) which is a time period shorter than the auxiliary operation time **T2 (S11).** When the absence continuation time exceeds the alarming time (**T2 -** α), the CPU 10 controls the alarm **15** in such a manner to perform an alarming operation. When the absence continuation time does not exceed the alarming time (**T2 -** α), the CPU 10 quits the appliance control program. Preferably, the alarming time (**T2 -** α) is selected to be shorter than the auxiliary operation time **T2** by about five to ten seconds such that a user notified can prevent extinction of the lighting fixture **4** by taking action to be detected by the human detection sensor **3.** In brief, the time "α" which starts from the alarming operation and ends at the extinction is preferred to be in the range of five to ten seconds.

Meanwhile, when the judgment in **S7** concludes that the absence continuation time exceeds the auxiliary operation time **T2,** the CPU 10 outputs the control order for turning off the lighting fixture **4** to the appliance driving unit **13,** thereby turning off the lighting fixture **4** and changing the operation mode of the lighting fixture **4** to the rest waiting state **(S8).** Subsequently the CPU 10 quits the current control program.

When the judgment in **S6** concludes that the lighting fixture **4** is not in the auxiliary operation state, the CPU 10 concludes that the lighting fixture **4** is in the rest waiting state. Further, the CPU 10 judges whether or not the counted time of the timer **10a,** that is, the time (absence continuation time in which an absence state continues) in which a human is not detected from the time at which the lighting fixture **4** is changed to the rest waiting state, exceeds the predetermined rest waiting time **T3 (S9).** When the absence continuation time does not exceed the rest waiting time **T3,** the CPU 10 quits the current control program and continues the rest waiting state. When the absence continuation time exceeds the rest waiting time **T3,** the CPU 10 ends the power saving control **(S10).** Consequently, the lighting fixture **4** is switched to the initial rest mode enabling a user to switch the lighting fixture **4** to the normal operation state by simply performing the on-operation by use of the manipulation switch **2.**

As explained above, in the appliance control system of the present embodiment, before the lighting fixture **4** is changed from the auxiliary operation state to the rest waiting state while the lighting fixture **4** is in the auxiliary operation state, that is, after a lapse of the alarming time from the time at which the lighting fixture **4** is changed to the auxiliary operation state, the alarm 15 provided to the controller **1** announces the termination of the operation of the lighting fixture **4.** Hence, it is possible to inform a human in the room that the lighting fixture **4** is going to be turned off soon. Consequently, a user notified can prevent changing the lighting fixture **4** from the auxiliary operation state to the rest waiting state by taking action to be detected by the human detection sensor **3.** In other words, the lighting fixture **4** can be prevented from being turned off when a human is not detected though the human is in the room. Thus, it is possible to prevent a user from feeling uncomfortable. Further, a user need not perform the on-operation but is only required to take action to be detected by the human detection sensor **3.** Hence, a user is not required to perform the on-operation to keep operating the lighting fixture 4. Consequently, it is possible to propose the appliance control system with improved usability.

In the above first and second embodiments, an example performing extinction control of the lighting fixture **4** based on the detection signal of the human detection sensor **3** is explained. However, the load device to be controlled is not limited to the lighting fixture **4.** The present invention may be applied to termination control of an air conditioner. For example, when successive time of a situation where the human detection sensor **3** does not detect a human exceeds the time **T1** while the air conditioner is in the normal operation state, the air conditioner may be changed to be in a power saving operation (auxiliary operation state). In the power saving operation, a preset temperature of the air conditioner is increased up to a predetermined temperature while the air conditioner is in a cooling operation, and the present temperature of the air conditioner is decreased down to a predetermined temperature while the air conditioner is in a heating operation. When successive time of a situation where a human is not detected from the start of the auxiliary operation exceeds the time **T2,** the air conditioner may be changed to the rest waiting state. When successive time of a situation where a human is not detected from the start of the rest waiting operation exceeds the time **T3,** the lighting fixture **4** may be changed to the initial rest state.

### (THIRD EMBODIMENT)

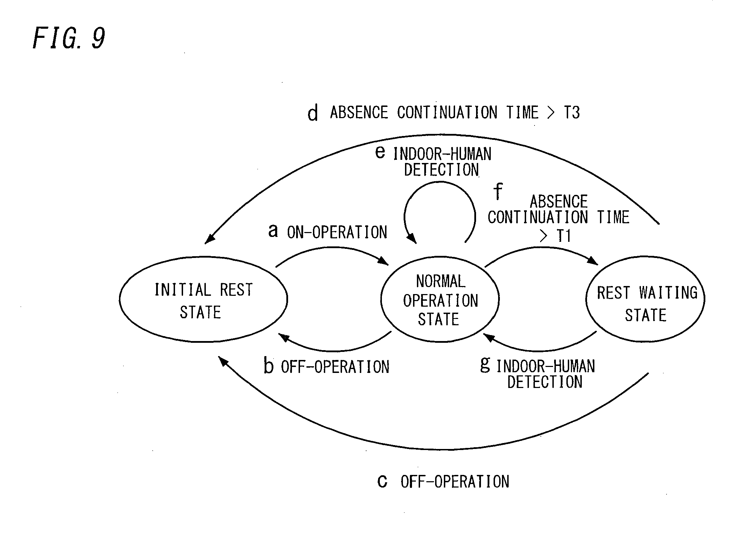

As shown in FIG. 9, the selecting unit **10b** of the present embodiment is configured to select the mode of the controlling unit **13** from the operation mode (normal operation state), the waiting mode (rest waiting state) serving as the limited mode, and the rest mode (initial rest state).

In the present embodiment, the changing module **102** is configured to, upon receiving the on-signal from the manual operation accepting unit **11,** change the controlling unit **13** to the operation mode and send the judgment start message (first judgment start message) to the judging module **103** (as illustrated by the arrow **"a"** in FIG. 9).

The changing module **102** is configured to, upon receiving the off-signal from the manual operation accepting unit **11,** change the controlling unit **13** to the rest mode and send the judgment stop message to the judging module **103** (as illustrated by the arrows **"b"** and **"c"** in FIG. 9).

The judging module **103** is configured to start the judgment process (first judgment process) in response to receipt of the judgment start message (first judgment start message). The judging module **103** is configured to, in the judgment process (first judgment process), control the timer unit **10a** in such a manner to count up the judgment time (absence continuation time). The judging module **103** is configured to, upon receiving the detection signal from the human detection sensor **3** before the judgment time exceeds the first waiting time (operation holding time) **T1,** output the presence signal to the judging module **103.** The judging module **103** is configured to, upon not receiving the detection signal from the human detection sensor **3** before the judgment time exceeds the first waiting time **T1,** output the absence signal to the judging module **103.** The judging module **103** is configured to, after outputting the presence signal in the first judgment process, perform the first judgment process again (as illustrated by the arrow "e" in FIG. 9).

The changing module **102** is configured to, upon receiving the absence signal from the judging module **103** while the identification result of the identifying module **101** indicates the operation mode, change the controlling unit **13** to the limited mode (waiting mode) and send the judgment start message (third judgment start message) to the judging module **103** (as illustrated by the arrow **"f" in** FIG. 9).

The changing module **102** is configured to, upon receiving the presence signal from the judging module **103** while the identification result of the identifying module **101** indicates the limited mode (waiting mode), change the controlling unit **13** to the operation mode and send the judgment start message (first judgment start message) to the judging module **103** (as illustrated by the arrow **"g"** in FIG. 9).

The changing module **102** is configured to, upon receiving the absence signal from the judging module **103** while the identification result of the identifying module **101** indicates the waiting mode, change the controlling unit **13** to the rest mode and send the judgment stop message to the judging module **103** (as illustrated by the arrow **"d"** in FIG. 9).

As mentioned above, in the appliance control system of the present embodiment, the selecting unit **10b** changes the controlling unit between the three modes (the operation mode, the rest mode, and the waiting mode).

According to the appliance control system of the present embodiment explained above, like the appliance control system of the first embodiment, it is possible to reduce the wasted consumption of electric power which would otherwise occur due to false detection.

In the present embodiment, the waiting mode is adopted as the limited mode. Alternatively, the limited mode may be the low consumption mode. In brief, the selecting unit **10b** is configured to change the controlling unit between the three modes (the operation mode, the rest mode, and the low consumption mode).

In this arrangement, the changing module **102** is configured to, upon receiving the absence signal from the judging module **103** while the identification result of the identifying module **101** indicates the operation mode, change the controlling unit **13** to the limited mode (waiting mode) and send the judgment start message (second judgment start message) to the judging module **103.**

The changing module **102** is configured to, upon receiving the presence signal from the judging module **103** while the identification result of the identifying module **101** indicates the limited mode (low consumption mode), change the controlling unit **13** to the operation mode and send the judgment start message (first judgment start message) to the judging module **103.**

Meanwhile, the changing module **102** is configured to, upon receiving the absence signal from the judging module **103** while the identification result of the identifying module **101** indicates the low consumption mode, change the controlling unit **13** to the rest mode and send the judgment stop message to the judging module **103.**

## Claims

1. An appliance control system comprising:
a control device;
a human detection sensor; and
a manual operation switch,
wherein said control device includes:
a controlling unit configured to control an appliance;
a selecting unit configured to select a mode of said controlling unit from an operation mode in which said controlling unit operates the appliance, a limited mode in which said controlling unit limits an operation of the appliance, and a rest mode in which said controlling unit terminates the operation of the appliance;
a manual operation accepting unit configured to select one from an on-signal and an off-signal in accordance with manual operation of said manual operation switch and output selected one to said selecting unit; and
a timer unit, and
said human detection sensor is located in a place where the appliance is installed, said human detection sensor being configured to output a detection signal to said selecting unit in response to human detection, and
said selecting unit includes an identifying module, a changing module, and a judging module, and
said identifying module is configured to identify the current mode of said controlling unit, and
said changing module is configured to, upon receiving the on-signal from said manual operation accepting unit, change said controlling unit to the operation mode and send a judgment start message to said judging module, and
said judging module is configured to start a judgment process in response to receipt of the judgment start message, said judging module being configured to, in the judgment process, control said timer unit in such a manner to count up judgment time, and said judging module being configured to, upon receiving the detection signal from said human detection sensor before the judgment time exceeds waiting time, output a presence signal to said judging module, and to, upon not receiving the detection signal from said human detection sensor before the judgment time exceeds the waiting time, output an absence signal to said judging module, and
said changing module is configured to, upon receiving the absence signal from said judging module while an identification result of said identifying module indicates the operation mode, change said controlling unit to the limited mode and send the judgment start message to said judging module, and
said changing module is configured to, upon receiving the presence signal from said judging module while the identification result of said identifying module indicates the limited mode, change said controlling unit to the operation mode and send the judgment start message to said judging module, and
said changing module is configured to, upon receiving the off-signal from said manual operation accepting unit, change said controlling unit to the rest mode and send a judgment stop message to said judging module, and
said judging module is configured to not perform the judgment process until receiving the judgment start message once receiving the judgment stop message, and
said changing module is configured to, upon receiving the absence signal from said judging module while the identification result of said identifying module indicates the limited mode, change said controlling unit to the rest mode and send the judgment stop message to said judging module.

2. An appliance control system as set forth in claim 1, wherein
said limited mode includes a low consumption mode in which said controlling unit operates the appliance at a power consumption lower than that in the operation mode and a waiting mode in which said controlling unit terminates the operation of the appliance, and
said changing module is configured to, upon receiving the absence signal from said judging module while the identification result of said identifying module indicates the operation mode, change said controlling unit to the low consumption mode and send the judgment start message to said judging module, and
said changing module is configured to, upon receiving the presence signal from said judging module while the identification result of said identifying module indicates the low consumption mode, change said controlling unit to the operation mode and send the judgment start message to said judging module, and
said changing module is configured to, upon receiving the absence signal from said judging module while the identification result of said identifying module indicates the low consumption mode, change said controlling unit to the waiting mode and send the judgment start message to said judging module, and
said changing module is configured to, upon receiving the absence signal from said judging module while the identification result of said identifying module indicates the waiting mode, change said controlling unit to the rest mode and send the judgment stop message to said judging module.

3. An appliance control system as set forth in claim 2, wherein
said changing module is configured to, upon receiving the presence signal from said judging module while the identification result of said identifying module indicates the waiting mode, change said controlling unit to the low consumption mode and send the judgment start message to said judging module.

4. An appliance control system as set forth in claim 2, wherein
said appliance control system further comprises an alarm, and
said changing module is configured to, upon receiving the absence signal from said judging module while the identification result of said identifying module indicates the low consumption mode, send an alarming start message to said alarm before changing said controlling unit to the waiting mode, and
said alarm is configured to, in response to receipt of the alarming start message, announce that the appliance is going to be turned off.
